# EUROPEAN PATENT SPECIFICATION

(11) **EP 3 676 156 B1**
(45) Date of publication and mention of the grant of the patent: **09.06.2021**
(21) Application number: 17758171.7
(22) Date of filing: 29.08.2017
(51) Int. Cl.: B62D 5/00

(54) **STEER-BY-WIRE STEERING SYSTEM OF A MOTOR VEHICLE WITH A FEEDBACK ACTUATOR HAVING AN INTEGRATED MRF BEARING**
STEER-BY-WIRE LENKSYSTEM EINES KRAFTFAHRZEUGS MIT EINEM RÜCKMELDEAKTUATOR BESITZEND EINES INTEGRATED MRF LAGERS
DIRECTION À COMMANDE PAR CÂBLE D'UN VÉHICULE AVEC UN ACTUATEUR RÉTROACTIF AYANT UN PALIER MAGNÉTORHEOLOGIC INTÉGRÉ

(43) Date of publication of application: 08.07.2020
(73) Proprietor: thyssenkrupp Presta AG, 9492 Eschen (LI); thyssenkrupp AG, 45143 Essen (DE)
(72) Inventor: POLMANS, Kristof, 6464 Tarrenz (AT); SZEPESSY, Imre, 9493 Mauren (LI); SCHACHT, Arne, 6800 Feldkirch (AT); DOLD, Markus, 9475 Sevelen (CH)
(74) Representative: thyssenkrupp Intellectual Property GmbH
(86) International application number: PCT/EP2017/071644
(87) International publication number: WO 2019/042531

(56) References cited:
- WO-A1-2017/001696
- DE-T2- 60 303 081
- US-A1- 2001 052 893

## Description

The present invention relates to a steer-by-wire steering system of a motor vehicle according to the preamble of claim 1.

In a steer-by-wire steering system, the vehicle's steering wheel is disengaged from the steering mechanism. Steering movement is achieved by a steering actuator with an electric motor. The steering actuator operates in response to detected values of various steering parameters, such as steering wheel angle and vehicle speed etc. The detected values are communicated electronically to the steering actuator from sensors, whereby the electric motor drives the rack and orients the steerable wheels in the desired direction. The steering actuator could be called steering gear.

Even though the mechanical linkage between the steering wheel and the road wheels has been eliminated, a steer-by-wire steering system is expected to produce the same functions and steering feel as a conventional mechanically linked steering system. The forces generated in moving the road wheels have to be fed back to the steering wheel to provide information for directional control of the vehicle to the driver. The feedback also contributes to a feeling of steering referred to as steering feel. In steer-by-wire steering systems the feedback and steering feel respectively is generated with a feedback actuator connected to the steering wheel.

US 2001/0052893 A1 relates according to the preamble of claim 1 to a haptic interface system for a steering device having a magnetically-controllable device that provides resistance forces opposing movement. The magnetically-controllable device contains a magnetically-controllable medium providing variable resistance forces in proportion to the strength of an applied magnetic field. The magnetically-controllable device is engaged during rotation of a steering wheel through a disc having peripheral gear teeth or a high-friction surface.

DE 603 03 081 T2 discloses a hand-wheel actuator for a steer-by-wire system of an automobile having a variable stopper comprising a magnetic rheological fluid damper, which includes a rotor, a stator, wiring and housing. When current is applied to wiring, particles in rheological fluid collimate and apply friction between rotor and stator, effectively stopping rotation of the rotor. From WO 2017/001969 A1 a haptic operating device having a rotary unit and a magnetorheological transmission device is known.

The patent application DE 10 2015 210 528 A1 discloses a feedback actuator with a damping device including spring elements, which introduces a damping torque into the steering shaft opposite to a steering toque. Drawbacks of this feedback actuator are its large build volume and complex construction.

It is an object of the present invention to provide an improved feedback actuator in a steer-by-wire steering system of a motor vehicle, which generates a better steering feel while having a space-saving and simple design.

This object is achieved by a steer-by-wire steering system of a motor vehicle having the features of claim 1.

Accordingly, a steer-by-wire steering system for a motorized vehicle comprising a feedback actuator to simulate a steering feel to a steering device is provided, wherein said feedback actuator has an electric motor with a motor shaft connected to a driver input shaft to be able to transmit a torque, wherein said motor shaft is able to be rotated in at least one rolling bearing, and wherein the rolling elements of the at least one rolling bearing are arranged in a magnetorheological fluid and wherein the feedback actuator further comprises means to pass a magnetic field through said magnetorheological fluid for stiffening said fluid and restricting movement of said rolling elements. This magnetorheologic fluid brake element allows for passive force feedback. Feedback actuator motor torque and costs are this way drastically reduced.

Preferably, the means to pass a magnetic field through said magnetorheological fluid includes a ring-shaped coil.

It is advantageous, if the coil is arranged in the at least one rolling bearing housing, wherein the at least one rolling bearing housing is preferably filled with the magnetorheological fluid. The MRF damping device is this way designed as one integrated unit and there is no need for extra packaging space.

In a preferred embodiment, the motor shaft is able to be rotated in an upper bearing and a lower bearing, wherein the upper bearing holds the free end of the motor shaft and the lower bearing is positioned at the opposite side of the motor's rotor. In that regard, the rolling elements of the lower bearing are preferably arranged in a magnetorheological fluid.

Further the motor shaft can hold a motor pulley as part of a transmission gear, wherein the transmission gear includes a belt connected on one side to the motor pulley and on another side to a pulley arranged on the driver input shaft. Alternatively, the motor shaft can hold a first gear and the drive input shaft can hold a second gear, wherein the first gear meshes the second gear. Preferably, the first gear is a worm and the second gear is a worm wheel.

Alternatively, the motor shaft can be coupled directly to the driver input shaft.

One exemplary embodiment of the present invention is described below with aid of the drawings. In all figures the same reference signs denote the same components or functionally similar components.
Figure 1 shows a steer-by-wire steering system in a schematic illustration,
Figure 2 shows a schematic illustration of a feedback actuator, and
Figure 3 shows a longitudinal cut of an electric motor of the feedback actuator.

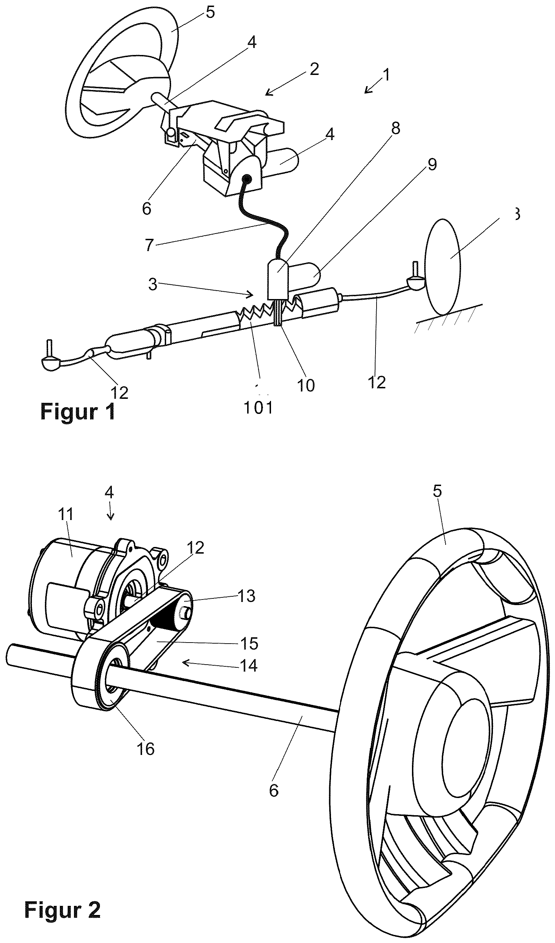

Figure 1 is a schematic representation of a steer-by-wire steering system 1 that comprises an actuation control system 2 to actuate road wheels 3 and a feedback actuator 4 to simulate the steering feel of a conventional mechanically linked steering system. A steering device 5, which is in the example a steering wheel, is connected to a driver input shaft 6. Position sensors 7 and torque sensor 8 are operably connected to driver input shaft 6. Position sensors 7 electronically detect the angular position of the driver input shaft 6, while the torque sensor 8 electronically detects and evaluates the torsional force acting on the driver input shaft 6. The angular displacement of the steering wheel 5 is detected, transmitted to the actuation control system 2, processed in the actuation control system 2, and applied to a servo motor 9 to move the steerable road wheels 3 via a rack 101 and pinion 102 system 10.

As shown in figure 2, the feedback actuator 4 includes an electric motor 11 having a motor shaft 12 rotatively driven by the motor 11 and connected to the driver input shaft 6. Since there is no direct mechanical coupling between the actuation control system and the steerable wheels, the driver does not receive any feedback from the road surface through the steering mechanism. Therefore, the feedback actuator 4 generates a reaction torque to the steering wheel 5, based upon a number of steering parameters such as vehicle speed, steering device angle, the steering device angle speed, the steering device turning acceleration, the yaw rate of the vehicle, road surface condition, and further driving parameters of the vehicle.

Formed into or onto the motor shaft 12 is a motor pulley 13 as part of a transmission gear 14. Attached to the motor pulley 13 is a belt 15 driving a pulley 16 connected to the driver input shaft 6.

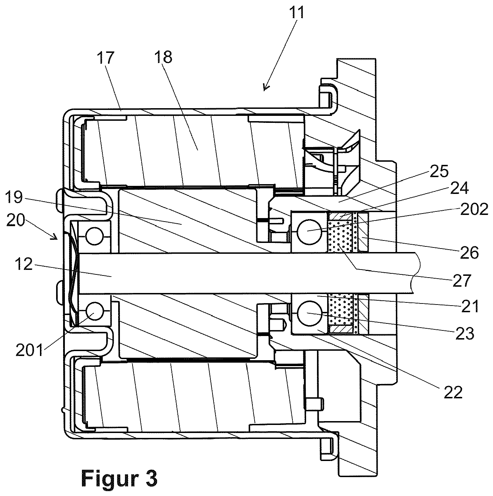

The electric motor 11 as depicted in figure 3 includes a motor housing 17 incorporating a stator 18. A rotor 19 is configured to rotate together with the motor shaft 12. The motor shaft 12 is allowed to rotate in bearing assemblies 20. The bearing assemblies 20 include an upper bearing 201 and a lower bearing 202, wherein the upper bearing 201 holds the free end of the motor shaft 12 facing away from the transmission gear (not shown) and the lower bearing 202 is positioned at the opposite side of the rotor 19. The lower bearing 202 has an inner bearing ring 21 and outer bearing ring 22 holding the rolling elements 23. At the front side of the outer bearing ring 22 a ring-shaped coil 24 functioning as an electromagnet is arranged. The coil 24 is arranged in the bearing housing 25 with the bearing 202 on one side and a cover 26 on the other side. The bearing housing 25 is filled with a magnetorheological fluid (MRF) 27. The bearing 202 comprises a seal to avoid that the magnetorheological fluid 27 can flow inside the electric motor 11.

When subjected to a magnetic field, the MRF 27 greatly increases its apparent viscosity, to the point of becoming a viscoelastic solid. This way the yield stress of the MRF can be controlled very accurately by varying the magnetic field intensity.

Thus, when a magnetic field is created by running an electric current from a power source, not shown, through the coil 24, the magnetorheological fluid 27 becomes stiffened (higher viscosity), so that a higher torque to rotate the ball bearing 202 and thereby a higher torque to rotate the motor shaft 12 is necessary and the movement of the motor shaft will be braked. Furthermore, the current could be increased and the magnetorheological fluid 27 becomes solidified therebetween, preventing movement of ball bearing 202 and thereby preventing movement of the motor shaft 12. When the power is off and the magnetorheological fluid 27 is a free-flowing liquid, it offers little resistance to the ball bearing's movement.

The bearing according to the present invention makes it possible to continuously control the damping rate by changing the viscosity of the MRF. End position lock of the steering wheel with high torque is possible, as well as curb-push off and curb damage protection. Even in case of electric motor failure damping can be carried out.

Ball bearings are illustrated, but other types of rolling elements could be substituted therefor.

## Claims

1. A steer-by-wire steering system (1) for a motorized vehicle comprising a feedback actuator (4) to simulate a steering feel to a steering device (5), wherein said feedback actuator (4) has an electric motor (11) with a motor shaft (12) connected to a driver input shaft (6) to be able to transmit a torque, wherein said motor shaft (12) is able to be rotated in at least one rolling bearing (20), **characterised in that** the rolling elements (23) of the at least one rolling bearing (202) are arranged in a magnetorheological fluid (27) and that the feedback actuator (4) further comprises means (24) to pass a magnetic field through said magnetorheological fluid (27) for stiffening said fluid and restricting movement of said rolling elements (23).

2. Steer-by-wire steering system according to claim 1, **characterised in that** the means to pass a magnetic field through said magnetorheological fluid (27) includes a ring-shaped coil (24).

3. Steer-by-wire steering system according to claim 2, **characterised in that** the coil (24) is arranged in the at least one rolling bearing housing (25).

4. Steer-by-wire steering system according to claim 3, **characterised in that** the at least one rolling bearing housing (25) is filled with the magnetorheological fluid (27).

5. Steer-by-wire steering system according to one of the preceding claims, **characterised in that** the motor shaft (12) is able to be rotated in an upper bearing (201) and a lower bearing (202), wherein the upper bearing (202) holds the free end of the motor shaft (12) and the lower bearing (202) is positioned at the opposite side of the motor's rotor (19).

6. Steer-by-wire steering system according to claim 5, **characterised in that** the rolling elements (23) of the lower bearing (202) are arranged in a magnetorheological fluid (27).

7. Steer-by-wire steering system according to one of the preceding claims, **characterised in that** the motor shaft (12) has a motor pulley (13) as part of a transmission gear (14), wherein attached to the motor pulley (13) is a belt (15) driving a pulley (16) connected to the driver input shaft (6).

## Patentansprüche

1. Steer-by-Wire Lenksystem (1) für ein Kraftfahrzeug umfassend einen Feedback-Aktuator (4), um ein Lenkgefühl in einer Lenkvorrichtung (5) zu simulieren, wobei der Feedback-Aktuator (4) einen Elektromotor (11) mit einer Motorwelle (12) aufweist, die mit einer Lenksäule (6) verbunden ist, um in der Lage zu sein, ein Drehmoment zu übertragen, wobei die Motorwelle (12) in mindestens einem Wälzlager (20) drehbar angeordnet ist, **dadurch gekennzeichnet, dass** die Wälzkörper (23) des mindestens einen Wälzlagers (202) in einer magnetorheologischen Flüssigkeit (27) angeordnet sind und dass der Feedback-Aktuator (4) weiterhin Mittel (24) umfasst, um ein Magnetfeld durch die magnetorheologische Flüssigkeit (27) zum Versteifen der Flüssigkeit und zum Beschränken einer Bewegung der Wälzkörper (23) hindurchtreten zu lassen.

2. Steer-by-Wire Lenksystem nach Anspruch 1, **dadurch gekennzeichnet, dass** das Mittel, um ein Magnetfeld durch die magnetorheologische Flüssigkeit (27) hindurchtreten zu lassen, eine ringförmige Spule (24) umfasst.

3. Steer-by-Wire Lenksystem nach Anspruch 2, **dadurch gekennzeichnet, dass** die Spule (24) in dem mindestens einen Wälzlagergehäuse (25) angeordnet ist.

4. Steer-by-Wire Lenksystem nach Anspruch 3, **dadurch gekennzeichnet, dass** das mindestens eine Wälzlagergehäuse (25) mit der magnetorheologischen Flüssigkeit (27) gefüllt ist.

5. Steer-by-Wire Lenksystem nach einem der vorhergehenden Ansprüche, **dadurch gekennzeichnet, dass** die Motorwelle (12) in einem oberen Lager (201) und in einem unteren Lager (202) drehbar angeordnet ist, wobei das obere Lager (202) das freie Ende der Motorwelle (12) hält und das untere Lager (202) an der gegenüberliegenden Seite des Motorläufers (19) positioniert ist.

6. Steer-by-Wire Lenksystem nach Anspruch 5, **dadurch gekennzeichnet, dass** die Wälzkörper (23) des unteren Lagers (202) in einer magnetorheologischen Flüssigkeit (27) angeordnet sind.

7. Steer-by-Wire Lenksystem nach einem der vorhergehenden Ansprüche, **dadurch gekennzeichnet, dass** die Motorwelle (12) eine Motorriemenscheibe (13) als Teil eines Transmissionsgetriebes (14) aufweist, wobei ein Riemen (15) an der Motorriemenscheibe (13) befestigt ist, der eine Riemenscheibe (16) antreibt, die mit der Lenksäule (6) verbunden ist.

## Revendications

1. Système de direction à commande électrique « steer-by-wire » (1) pour un véhicule motorisé, comprenant un actionneur à rétroaction (4) pour simuler une sensation de direction pour un dispositif de direction (5), dans lequel ledit actionneur à rétroaction (4) a un moteur électrique (11) avec un arbre de moteur (12) raccordé à un arbre d'entrée de conducteur (6) pour être capable de transmettre un couple, dans lequel ledit arbre de moteur (12) est capable d'être tourné dans au moins un palier à roulement (20), **caractérisé en ce que** les éléments roulants (23) de l'au moins un palier à roulement (202) sont agencés dans un fluide magnétorhéologique (27) et que l'actionneur à rétroaction (4) comprend en outre des moyens (24) pour faire passer un champ magnétique à travers ledit fluide magnétorhéologique (27) pour raidir ledit fluide et limiter le mouvement desdits éléments roulants (23).

2. Système de direction à commande électrique « steer-by-wire » selon la revendication 1, **caractérisé en ce que** les moyens pour faire passer un champ magnétique à travers ledit fluide magnétorhéologique (27) incluent une bobine de forme annulaire (24).

3. Système de direction à commande électrique « steer-by-wire » selon la revendication 2, **caractérisé en ce que** la bobine (24) est agencée dans l'au moins un logement de palier à roulement (25).

4. Système de direction à commande électrique « steer-by-wire » selon la revendication 3, **caractérisé en ce que** l'au moins un logement de palier à roulement (25) est rempli avec le fluide magnétorhéologique (27).

5. Système de direction à commande électrique « steer-by-wire » selon l'une des revendications précédentes, **caractérisé en ce que** l'arbre de moteur (12) est capable d'être tourné dans un palier supérieur (201) et un palier inférieur (202), dans lequel le palier supérieur (202) retient l'extrémité libre de l'arbre de moteur (12) et le palier inférieur (202) est positionné sur le côté opposé d'un rotor (19) du moteur.

6. Système de direction à commande électrique « steer-by-wire » selon la revendication 5, **caractérisé en ce que** les éléments roulants (23) du palier inférieur (202) sont agencés dans un fluide magnétorhéologique (27).

7. Système de direction à commande électrique « steer-by-wire » selon l'une des revendications précédentes, **caractérisé en ce que** l'arbre de moteur (12) a une poulie de moteur (13) en tant que partie d'un engrenage de transmission (14), dans lequel, attachée à la poulie de moteur (13), est une courroie (15) entraînant une poulie (16) raccordée à l'arbre d'entrée de conducteur (6).
